# EUROPÄISCHE PATENTSCHRIFT

(11) **EP 0 808 880 B1**
(45) Veröffentlichungstag und Bekanntmachung des Hinweises auf die Patenterteilung: **08.01.2003**
(21) Anmeldenummer: 97105909.2
(22) Anmeldetag: 10.04.1997
(51) Int. Cl.: C09C 1/30, C09C 3/12, C09D 7/12, B01J 2/30, C09K 3/14, C08K 9/06

(54) **Silanisierte Kieselsäure**
Silanized silicas
Silices silanisées

(30) Priorität: 26.04.1996 DE 19616781
(43) Veröffentlichungstag der Anmeldung: 26.11.1997
(73) Patentinhaber: Degussa AG, 40474 Düsseldorf (DE)
(72) Erfinder: Hartmann, Werner, Dr., 64832 Babenhausen (DE); Meyer, Jürgen, Dr., 79618 Rheinfelden (DE); Jacobsen, Hauke, Dr., 79618 Rheinfelden (DE); Hennig, Thomas, Dr., 63571 Gelnhausen (DE); Karbe, Hennig, 65462 Gustavsburg (DE); Schachtely, Uwe, 63517 Rodenbach (DE)

(56) Entgegenhaltungen:
- DE-A- 2 403 783
- US-A- 4 208 316

## Beschreibung

Die Erfindung betrifft eine niedrig verdickende, silanisierte pyrogen auf dem Wege der Flammenhydrolyse von SiCl₄ hergestellte Kieselsäure, ein Verfahren zu ihrer Herstellung und ihre Verwendung.

Gegenstand der Erfindung ist eine silanisierte pyrogen auf dem Wege der Flammenhydrolyse von SiCl₄ hergestellte Kieselsäure mit folgenden physikalisch-chemischen Eigenschaften:

| | | |
|---|---|---|
| Spezifische Oberfläche | m²/g | 80 - 400 |
| Primärteilchengröße | nm | 7 - 40 |
| Stampfdichte | g/l | 50 - 300 |
| pH | | 3 - 10 |
| Kohlenstoffgehalt | % | 0,1 - 15 |
| DBP-Zahl | % | < 200 |

Ein weiterer Gegenstand der Erfindung ist ein Verfahren zur Herstellung der silanisierten, niedrig verdickenden pyrogen auf dem Wege der Flammenhydrolyse von SiCl₄ hergestellte Kieselsäure, welches dadurch gekennzeichnet ist, daß man eine Kieselsäure in einem geeigneten Mischgefäß unter intensivem Mischen gegebenenfalls zunächst mit Wasser oder verdünnter Säure und anschließend mit einem Oberflächenmodifizierungsreagens oder einem Gemisch aus mehreren Oberflächenmodifizierungsreagentien besprüht, 15 bis 30 Minuten nachmischt, bei einer Temperatur von 100 bis 400 °C über einen Zeitraum von 1 bis 6 h tempert und anschließend die hydrophobe silanisierte Kieselsäure durch mechanische Einwirkung (zum Beispiel in einer Kugelmühle) destrukturiert/verdichtet und in einer Mühle (zum Beispiel Luftstrahlmühle, Stiftmühle) nachvermahlt.

Als Oberflächenmodifizierungsreagens kann beispielsweise Hexamethyldisilazan eingesetzt werden.

Ein weiterer Gegenstand der Erfindung ist die Verwendung der erfindungsgemäßen niedrig verdickenden, silanisierten pyrogen auf dem Wege der Flammenhydrolyse von SiCl₄ hergestellte Kieselsäure zur Herstellung von niedrigviskosen Polymersystemen mit niedriger Fließgrenze, wie zum Beispiel 1- und 2-komponentige peroxidkondensations- und additionsvernetzende Siliconkautschukmassen, Klebstoffen, Abformmassen, Dichtmassen usw., ihre Verwendung als Mattierungsmittel, zum Beispiel in Lacken, Folien, als Freeflow-Mittel (zum Beispiel SAP, Feuerlöschpulver), zur Herstellung von Kabelgelen, als Antisedimentationsmittel in flüssigen Kunststoffsystemen und Reaktionsharzen (zum Beispiel synth. Marmor, Polymerbeton, Zahnersatz), als Poliermittel und/oder Putzkörper.

Die erfindungsgemäße niedrig verdickende, silanisierte pyrogen auf dem Wege der Flammenhydrolyse von SiCl₄ hergestellte Kieselsäure weist die folgenden Vorteile auf:

In Polymersystemen, die mit synthetischen Kieselsäuren verstärkt werden, werden erst bei sehr hohen Füllgraden gute mechanische Festigkeiten erzielt. Dies gelingt bei bekannten Kieselsäuren nur durch eine in-situ Hydrophobierung der Verstärkerkieselsäure beim Herstellen/Compoundieren von entsprechenden Dicht-, Abformund Dupliermassen etc. Diese Verfahrensweise ist sehr zeitund energieaufwendig.

Die erfindungsgemäße Kieselsäure ermöglicht durch ihre geringe Verdickungswirkung und niedrige Fließgrenze beispielsweise hohe Füllgrade und damit gute mechanische Festigkeiten. Der o. g. aufwendige Compoundierprozeß kann weitgehend entfallen.

Das erfindungsgemäße Verfahren weist den Vorteil auf, daß aufgrund der kontinuierlichen Prozeßführung vermindert Schwankungen in der Produktqualität auftreten.

### Beispiel

Aerosil 200 wird mit 4,3 Teilen Wasser und 18,5 Teilen HMDS (Hexamethyldisilazan) gemischt und 140 °C getempert. Die hydrophobe silanisierte Kieselsäure wird anschließend auf einer kontinuierlich arbeitenden Vertikalkugelmühle auf ca. 250 g/l verdichtet. Danach wird die Kieselsäure mittels einer Luftstrahlmühle nachvermahlen.

Die erhaltene Kieseläsure hat folgende Eigenschaften:

| **Beispiel** | **BET** **m**^{**2**}**/g** | **Stampfdichte** **g/l** | **pH** | **C-Gehatt** | **Trocknungsverlust** **%** | **Glühverlust** **%** | **DBP-Zahl** **%** |
|---|---|---|---|---|---|---|---|
| VT 1128/1 | 145 | 188 | 7,3 | 2,7 | 2,4 | 0,3 | 90 |

### Anwendungstechnische Prüfung

| 2K-RTV-Silicone Rubber (Füllgrad 20 %) | | |
|---|---|---|
| Rheologie | Fließgrenze | 1,9 Pa |
| | Viskosität | 30,9 s⁻¹ |
| Mechanische Eigenschaften | Zugfestigkeit | 1,7 N/mm² |
| | Bruchdehnung | 230 % |
| | Weiterreißfestigkeit | 14,0 N/mm |
| | Shore A Härte | 34 |

## Patentansprüche

1. Silanisierte pyrogen auf dem Wege der Flammenhydrolyse von SiCl₄ hergestellte Kieselsäure mit folgenden physikalisch-chemischen Eigenschaften:
| | | |
|---|---|---|
| Spezifische Oberfläche | m²/g | 80 - 400 |
| Primärteilchengröße | nm | 7 - 40 |
| Stampfdichte | g/l | 50 - 300 |
| pH | | 3 - 10 |
| Kohlenstoffgehalt | % | 0,1 - 15 |
| DBP-Zahl | % | < 200 |

2. Verfahren zur Herstellung der silanisierten pyrogen auf dem Wege der Flammenhydrolyse von SiCl₄ hergestellte Kieselsäure nach Anspruch 1, **dadurch gekennzeichnet, daß** man eine Kieselsäure in einem geeigneten Mischgefäß unter intensivem Mischen, gegebenenfalls zunächst mit Wasser oder verdünnter Säure und anschließend mit einem Oberflächenmodifizierungsreagens oder einem Gemisch aus mehreren Oberflächenmodifizierungsreagentien besprüht, 15 bis 30 Minuten nachmischt, bei einer Temperatur von 100 bis 400 °C über einen Zeitraum von 1 bis 6 h tempert, anschließend die hydrophobe silanisierte Kieselsäure durch mechanische Einwirkung destrukturiert/verdichtet und in einer Mühle nachvermahlt.

3. Verwendung der silanisierten pyrogen auf dem Wege der Flammenhydrolyse von SiCl₄ hergestellte Kieselsäure gemäß Anspruch 1 zur Herstellung von niedrigviskosen Polymersystemen mit niedriger Fließgrenze als Mattierungsmittel (zum Beispiel in Lacken, Folien), Freeflow-Mittel (zum Beispiel SAP, Feuerlöschpulver), Kabelgele, Antisedimentationsmittel in flüssigen Kunststoffsystemen und Reaktionsharzen, Poliermittel und Putzkörper.

## Claims

1. Silanised silica which consists of silica pyrogenically produced from SiCl₄ by flame hydrolysis and has the following physicochemical properties:
| | | |
|---|---|---|
| specific surface | m²/g | 80 - 400 |
| primary particle size | nm | 7 - 40 |
| tamped density | g/l | 50 - 300 |
| pH | | 3 - 10 |
| carbon content | % | 0.1 - 15 |
| DBP number | % | < 200 |

2. Process for the production of the silanised silica which consists of silica pyrogenically produced from SiCl₄ by flame hydrolysis according to claim 1, **characterised in that** a silica, in a suitable mixing vessel and with intensive mixing, is sprayed optionally first of all with water or dilute acid and subsequently with a surface-modifying reagent or with a mixture of several surface-modifying reagents, further mixed for 15 to 30 minutes and tempered over a period of 1 to 6 hours at a temperature of 100°C to 400°C, then the hydrophobic silanised silica is destructured/compacted by mechanical action and further ground in a mill.

3. Use of the silanised silica which consists of silica pyrogenically produced from SiCl₄ by flame hydrolysis according to claim 1 for the production of low-viscosity polymer systems having a low yield point, as dulling agents (for example, in paints, films), freeflow agents (for example, SAP, fire-extinguishing powders), cable gels, anti-sedimentation agents in liquid plastics systems and in reaction resins, polishing materials and cleaning heads.

## Revendications

1. Acide silicique silanisé produit de façon pyrogène par voie d'hydrolyse à la flamme de SiCl₄, ayant les propriétés physico-chimiques suivantes :
| | | |
|---|---|---|
| Surface spécifique | m²/g | 80-400 |
| Taille particulaire primaire | nm | 7-40 |
| Densité à la compression | g/l | 50-300 |
| pH | | 3-10 |
| Teneur en carbone | % | 0,1-15 |
| Indice DBP | % | < 200 |

2. Procédé de production de l'acide silicique produit de façon pyrogène par voie d'une hydrolyse à la flamme de SiCl₄ selon la revendication 1,
**caractérisé en ce qu'**
on mélange un acide silicique dans un récipient de mélange approprié, en remuant de façon intensive, le cas échéant tout d'abord avec de l'eau ou un acide dilué, puis avec un réactif modificateur de surface ou un mélange de plusieurs réactifs modificateurs de surface, on mélange encore pendant 15 à 30 minutes, on établit une température de 100 à 400°C pendant un intervalle de 1 à 6 heures, puis on déstructure/comprime l'acide silicique silanisé hydrophobe par une action mécanique et on le broie ensuite dans un moulin.

3. Utilisation de l'acide silicique silanisé produit de façon pyrogène par voie d'hydrolyse à la flamme de SiCl₄ selon la revendication 1,
pour la fabrication de systèmes polymères basse viscosité ayant une faible limite d'écoulement comme agents de matage, par exemple dans les vernis, les feuilles), agent d'écoulement libre (SAP), poudre d'extinction des faits, gels pour câbles, agent anti-sédimentation dans les systèmes synthétiques liquides et les résines réactionnelles, les produits de polissage et les produits de nettoyage.
